# EUROPÄISCHE PATENTSCHRIFT

(11) **EP 3 790 729 B1**
(45) Veröffentlichungstag und Bekanntmachung des Hinweises auf die Patenterteilung: **14.02.2024**
(21) Anmeldenummer: 19720821.8
(22) Anmeldetag: 25.04.2019
(51) Int. Cl.: B29C 49/44, B29C 49/18, B29C 70/40, B29C 70/46, B29C 49/00, B29K 105/08, B29K 311/10, B29K 101/12, B32B 5/12, B29D 99/00, B29C 49/64, B29D 23/00, B29C 48/91, B29C 48/90, B29C 48/00, B29C 48/09, B29C 49/04

(54) **VORRICHTUNG UND VERFAHREN ZUM KONTINUIERLICHEN BLASFORMEN FASERVERSTÄRKTER THERMOPLASTISCHER HOHLPROFILE MIT EINEM KONSTANTEN ODER SICH ÄNDERNDEN QUERSCHNITT**
DEVICE AND METHOD FOR CONTINUOUSLY BLOW MOLDING FIBER-REINFORCED THERMOPLASTIC HOLLOW PROFILES HAVING A CONSTANT OR CHANGING CROSS-SECTION
DISPOSITIF ET PROCÉDÉ DE MOULAGE PAR SOUFFLAGE CONTINU DE PROFILÉS CREUX THERMOPLASTIQUES, RENFORCÉS PAR DES FIBRES, AYANT UNE SECTION TRANSVERSALE CONSTANTE OU VARIABLE

(30) Priorität: 11.05.2018 DE 102018111283
(43) Veröffentlichungstag der Anmeldung: 17.03.2021
(73) Patentinhaber: HERONE GMBH, 01307 Dresden (DE)
(72) Erfinder: BARFUSS, Daniel, 01099 Dresden (DE); ROHKAMM, Alexander, 01097 Dresden (DE); SCHWANEMANN, Philipp, 28209 Bremen (DE); WÜRFEL, Veit, 01127 Dresden (DE)
(74) Vertreter: Schröer, Gernot H.
(86) Internationale Anmeldenummer: PCT/EP2019/060556
(87) Internationale Veröffentlichungsnummer: WO 2019/214951

(56) Entgegenhaltungen:
- WO-A1-98/16376
- US-A1- 2012 295 046

## Beschreibung

Die Erfindung betrifft eine Vorrichtung und ein Verfahren zum Herstellen von endlosen faserverstärkten, thermoplastischen, hohlprofilförmigen Bauteile mit einem konstanten oder sich ändernden Querschnitt durch Blasformen, basierend auf einem Faser-thermoplastischen Kunststoff-Verbund (FKV).

Beim Blasformen wird eine strangförmige, hohle Preform, die auf einer druckdichten Membran abgelegt ist, unter Beaufschlagung von Innendruck und Temperatur in ihrer endgültigen Form semikontinuierlich konsolidiert und dabei an einem Außenwerkzeug abformt. Unter Preform wird im Sinne dieser Patentanmeldung ein Zwischenschritt bei der Herstellung von Bauteilen aus FKV verstanden, bei dem ein noch nicht konsolidierter Vorformling, der bereits die endgültige Anzahl an Verstärkungsfilamenten- und Lagen aufweist, so geformt ist, dass dieser nahezu den endgültigen Bauteilabmessungen entspricht. Gleichzeitig enthält die Preform die notwendige Menge an Matrixwerkstoff, der in der Preform fadenartig eingebunden ist. Mit Filamenten sind in dieser Anmeldung textile Fasern endloser Länge gemeint. Mit Konsolidieren ist der Bearbeitungsschritt gemeint, bei dem der Matrixwerkstoff fließfähig vorliegt und den Verstärkungsfilamentanteil derart benetzt, dass nach seiner Erstarrung keine Kapillareffekte im Bauteil mehr auftreten können. Quasi kontinuierlich bedeutet im Sinne dieser Anmeldung, dass durch eine Vielzahl von aufeinanderfolgenden Verfahrensschritten eine Vielzahl von Bauteilen entsteht.

Das Dokument DE 0000 698 104 87 T2 offenbart ein Blasverfahren und eine Vorrichtung zum Herstellen von Hohlkörpern aus FKV mit thermoplastischer Matrix. Die Matrix liegt fadenförmig vor und ist im nicht konsolidierten Zustand mit dem Verstärkungsmaterial gemischt. Die im Verfahren verwendete Druckmembran weist nahezu die Innenform des Hohlkörpers auf und ist elastisch ausgebildet. Die Formgebung der auf die Druckmembran aufgebrachten Preform erfolgt durch Einbringen dieser in ein zweischaliges, schließbares und beheizbares Werkzeug, das auf Schmelztemperatur des Thermoplasts aufgewärmt ist. Nach der Haltezeit muss das Werkzeug auf Raumtemperatur abkühlen um das Bauteil anschließend entformen zu können. Alternativ kann auch die Preform aufgewärmt werden. Der Abkühlvorgang findet in dem Werkzeug mit variothermer Temperaturführung statt.

Nachteilig ist der notwendige Heiz- und Abkühlkreislauf bei geschlossener Werkzeugform, der lange Taktzeiten zur Folge hat
Aus der DE 0000 198 039 65 A1 ist ein Verfahren zur Herstellung von hohlen Formkörpern, basierend auf FKV, bekannt. Die Preform wird durch eine Vielzahl an textiltechnisch verarbeiteten Hybridgarnen, die eine Mischung aus Verstärkungsfilamentanteil und Matrixfilamentanteil aufweisen, auf eine Druckblase aufgebracht. Vor dem Einbringen der Druckblase und der Preform in eine, mindestens zweischalig ausgeführte Werkzeugform erfolgt die berührende oder berührungslose Aufheizung der Preform über die Schmelztemperatur der eingesetzten thermoplastischen Kunststoffmatrix hinaus. Durch die Beaufschlagung mit Druck wird die Preform mit dem aufgeschmolzenen Kunststoff gegen die Wand des Werkzeuges gepresst. Der Abkühlvorgang setzt sofort durch Wärmeleitung zwischen aktiv gekühlter Werkzeugwand und Preform ein.

Ein signifikanter Nachteil ist, dass das notwendige Fließen der verflüssigten Matrix zwar stattfindet, nicht aber unter Temperatur bei gleichzeitiger Druckbeaufschlagung, da die aufgeschmolzene Matrix bei Berührung mit der aktiv gekühlten Werkzeugwand sofort erstarrt. Somit wird der Verstärkungsfilamentanteil über die Bauteildicke nicht konstant mit Matrixmatrixmaterial benetzt.

In der DE 1020 090 574 98 A1 ist ein Verfahren zur Herstellung von strangförmigen Hohlkörpern aus FKV beschrieben. Dabei wird ein aus Verstärkungs- und Kunststofffilamenten textiltechnisch hergestellter Schlauch auf einen Kunststoffschlauch geschoben. Beide werden dann durch aufblasen des Kunststoffschlauches gegen eine beheizte Werkzeugwand gedrückt. In einer weiteren Ausführung kann ein dritter Schlauch aus einem gleichgearteten Kunststoff außen um den Verstärkungsfilamentanteil geschoben werden. Der dreischichtige Aufbau wird dann auf gleiche Art und Weise wie der zweischichtige Aufbau konsolidiert. Der innere Kunststoffschlauch wird durch Druckluft aufgeblasen und gleichzeitig dadurch auch gekühlt, so dass nur die Seite des Schlauches aufgeschmolzen wird, die mit dem Verstärkungsfilamentanteil Kontakt hat. Der für das Verfahren benötigte Druck beträgt vorzugsweise 10 - 50 bar.

Nachteilig ist hier, dass das strangförmige Bauteil, das Hohlkörper ausgeformt ist, nur diskontinuierlich hergestellt werden kann. Gleichzeitig ist die Formgebung des strangförmigen Profils begrenzt, da die schlauchförmige Grundstruktur des Blasschlauches erhalten bleiben muss, um die notwendige Dichtheit gegenüber dem Druckmedium zu gewährleisten.

Die DE 1020 110 563 91 A1 offenbart ein Verfahren zur Herstellung eines Rohres aus FKV, das geeignet ist, Flüssigkeiten mit hohem Druck zu leiten. Dazu wird ein extrudierter Kunststoffschlauch mit einem Schlauch, bestehend aus Verstärkungs-filamenten, beschichtet und vergleichbar zu der DE 1020 090 574 98 A1 konsolidiert. Alternativ kann die Verstärkungsfilamentschicht auch mit einem geeigneten Klebstoff auf den Kunststoffschlauch gefügt werden.

Dieses Dokument zeigt ein Verfahren zur Herstellung eines Schlauches zum Transport von flüssigen Medien und stellt daher ein anderes technisches Gebiet dar.

Ein weiteres Verfahren zur Herstellung von Hohlkörpern aus FKV ist in der DE 1020 121 120 21 A1 dokumentiert. Die aus endlosen Verstärkungs- und Matrixfilamenten bestehende Preform wird mittels eines Expansionsprofiles gegen eine variotherme Werkzeugwand gedrückt. Dabei schmilzt die Kunststoffmatrix auf und benetzt die Verstärkungsfilamente. Nach Verringerung des Druckes und Abkühlen des Bauteiles in der Form kann dieses entnommen werden.

Ein besonderer Nachteil ist, dass das Aufheizen und Abkühlen innerhalb des Schließtaktes des Werkzeuges stattfindet und somit die Taktzeit des Verfahrens von der Aufheiz- und Abkühlrate des metallischen Werkzeuges abhängig ist.

Eine weitere Lösung ist durch die EP 0000 011 752 95 B1 offenbart. Die auf einen aufblasbaren Kunststoffsack aufgebrachte Preform wird in ein mindestens zwei-schaliges Werkzeug eingebracht und mit einem Druck von mehr als 40 bar mittels Druckluft gegen die variothermen Werkzeugwände gepresst. Druck und Temperatur sind während der Fließzeit der thermo- oder duroplastischen Matrix konstant. Nach dem Erstarren oder Aushärten der Matrix durch abkühlen der Werkzeugwände kann das Bauteil entnommen werden.

Auch bei dieser Lösung ist die Taktrate von der Aufheiz- und Abkühlzeit des Werkzeuges abhängig, die somit die Taktzeit des Verfahrens vorgibt.

In der EP 0000 013 681 79 B1 ist ein Verfahren zur Herstellung von Hohlkörpern, basierend auf einem FKV mit thermoplastischer Matrix, offenbart. Durch einen Flechtprozess wird das verwendete Verstärkungsfilamentmaterial, das mit einem thermoplastischen Material durchmischt ist, auf einem extrudierten Kunststoffkörper aufgebracht. Nach Beendigung des Preformaufbaus wird diese dann einer Konsolidierungsvorrichtung, bestehend aus einer zweischaligen Werkzeugform, zugeführt. Durch die Beaufschlagung des extrudierten Kunststoffkörpers mit Druck, der die Preform an die beheizte Werkzeugwand presst, erfolgt das Aufschmelzen des Thermoplasts und in Folge dessen die Benetzung des Verstärkungsfilamentmaterials. Durch Abkühlen der Werkzeugform erstarrt das Thermoplast.

Nachteilig ist, dass der Herstellungsprozess diskontinuierlich ist, da die Bauteillänge der jeweiligen Werkzeuglänge entspricht.

Ein weiteres bekanntes Fertigungsverfahren ist in der DE 10 2015 009 250 A1 beschrieben. Das sogenannte Orbitalwickeln ermöglicht es, bandförmig angeordnete, endlose Verstärkungsfilamente - sogenannte Tapes - auf einem rotationssymmetrischen oder nicht rotationssymmetrischen Kern beliebiger Länge abzulegen. Insbesondere sollen hier Tapes verwendet werden, bei denen die Verstärkungsfasern mit einem thermoplastischen Matrixmaterial umhüllt sind. Durch lokales, berührungsloses Erwärmen über die Schmelztemperatur des Thermoplasts hinaus und durch Anpressen des Tapes auf dem Wickelgrund durch eine Anpressrolle erfolgt die Konsolidierung zum Werkstoff.

Nachteilig bei diesem Verfahren sind die hohen Investitionskosten. Sobald ein für FKV typischer Mehrlagenverbund hergestellt werden soll, müssen mehrere Orbitalwickelköpfe, die jeweils eine kostenintensive Heizvorrichtung erfordern, hintereinander platziert werden. Weiterhin wird der Konsolidierungsprozess als nachteilig angesehen, da der Abkühlvorgang lediglich aufgrund der Wärmeleitfähigkeit des unter dem abgelegten Tape befindlichen Material basiert und damit je nach Lagenaufbau variiert. Durch die Wärmeleitung unter den abgelegten Tapes findet kein kontrollierter Abkühlvorgang des Thermoplasts statt. So ist nicht auszuschließen, dass der Werkstoff zu schnell abkühlt und der Abkühlvorgang damit einen negativen Einfluss auf die Kristallbildung im thermoplastischen Matrixanteil hat. Weiterhin kann eine unregelmäßige Oberfläche des Bauteiles systembedingt nicht verhindert werden, da die Außenkontur des strangförmigen Bauteiles nicht gegen eine Werkzeugwand zur Formgebung gepresst wird. Optisch hochwertige Bauteiloberflächen können so nicht realisiert werden.

Aus der US2012295046A1 ist ein Verfahren zur Herstellung eines Verbundteils bekannt. Das Verbundteil wird hergestellt, indem ein Rohr aus Verbundmaterial und eine darin angeordnete Folie mit Druck beaufschlagt und auf eine Umformtemperatur erwärmt werden. Dabei wird die Folie mit einer Vielzahl von geflochtenen Faserbandstreifen des Rohrs verbunden. Die Faserbandstreifen sind jeweils als eine einzelne Schicht aus unidirektionalen Fasern hergestellt, wobei die Faserbandstreifen aus Fasern, mit oder ohne Zwischenräume zwischen den Fasern, geflochten sind. Die Fasern sind zumindest teilweise in eine thermoplastische Matrix eingebettet.

Aufgabe der Erfindung ist es ein Verfahren und eine Vorrichtung zur quasi kontinuierlichen Herstellung von strangförmigen, hohlen Bauteilen mit konstanten oder sich ändernden Profilquerschnitten aus FKV bereit zu stellen.

Erfindungsgemäß wird die Aufgabe durch eine Vorrichtung mit den Merkmalen des Hauptanspruchs 1, einem Verfahren nach Anspruch 9 sowie eine Verwendung nach Anspruch 13 gelöst. Vorzugsweise Weiterbildungen des Verfahrens und der Vorrichtung sind Gegenstand der jeweils rückbezogenen Unteransprüche.

Gegenstand der Erfindung ist eine Vorrichtung zur Durchführung des erfindungsgemäßen Verfahrens.

Dabei umschließt das mindestens zweiteilig ausgeführte und verschließbare Umformwerkzeug in seinem geschlossenen Zustand das Preformsegment, das wiederum die im Inneren befindliche Druckkammer umhüllt. Die horizontal angeordneten Mittelachsen des Umformwerkzeuges, des Preformsegmentes und der Druckkammer sind konzentrisch angeordnet.

Das Umformwerkzeug besteht erfindungsgemäß aus mindestens drei Werkzeug-segmenten, die unabhängig voneinander isotherm beheizbar und durch Wärmeübergangsbarrieren thermisch voneinander abgetrennt sind. Weiterhin weisen die Werkzeugsegmente an ihrer Innenseite schnell auswechselbare Module auf, deren Geometrie der Innenwand der Außenkontur des Preformsegmentes entspricht. In einer ersten erfindungsgemäßen Ausführung weisen die Innenwände der Module einen konstanten Querschnitt über die gesamte Länge des Umformwerkzeuges auf.

Ein weiterer Bestandteil der Vorrichtung ist eine Druckkammer, die von der Preform umschlossen ist. Dabei wird diese Druckkammer, in einer alternativen erfindungs-gemäßen Ausführungsform, aus einer endlos zugeführten schlauchförmigen Druckmembran, deren Außenseite mit der Preform beschichtet ist, und den Dichtelementen gebildet. Diese Dichtelemente sind wiederum zueinander beabstandet auf einem Koppelelement positioniert. Das Koppelelement ist im Bereich der Preformingeinheit fixiert und dessen Mittelachse ist konzentrisch zur Druckkammer angeordnet. Die radial wirksame Dichtelemente verspannen sich unter Druck-beaufschlagung mit der Druckmembran. Die zur Abdichtung benötigte Kraft wird durch die radial wirkenden Dichtungen in die Druckmembran eingeleitet, auf das Preformsegment übertragen und in die Werkzeugsegmente abgeleitet.

Der zur Aufweitung der radial wirkenden Dichtungen benötigte Innendruck p₁ wird durch radial angeordnete Luftaustrittsöffnungen im Bereich der Druckelemente, die wiederum mit einer im Koppelelement verlaufenden Druckleitung verbunden sind, eingeleitet.

Die Wandstärke der Druckmembran liegt zwischen 50 µm und 200 µm, bevorzugt50 µm und 100 µm und ganz besonders bevorzugt zwischen 50 µm und 60 µm.

Der zur Verdichtung der Preform notwendige Druck p₂ liegt zwischen 5 bar und 9 bar. Der zur Erzeugung der Dichtwirkung benötigte Druck p₁ ist höher als der Druck p₂.

In einer alternativen, gleichfalls bevorzugten Ausgestaltung besteht die Druckkammer aus einem ortsfesten und der Länge der Konsolidierungsvorrichtung entsprechenden Schlauch aus einem temperaturstabilen, dehnbaren Material und den beiden, in einem (definierten) Abstand zueinander positionierten Dichtelementen, die mit der Preform verspannt werden.

In einer alternativen, besonders bevorzugten Ausgestaltung ist das Werkzeugsegment der Konsolidierungszone derart gestaltet, dass Bauteile mit variierenden Querschnitten in axialer und radialer Richtung geformt werden.

Bei dem erfindungsgemäßen Verfahren wird eine Konsolidierungseinheit verwendet, die es ermöglicht, mit einem modularen, mehrteiligen Umformwerkzeug und einer innenliegenden Druckkammer in einem semikontinuierlichen Prozess eine Preform, bestehend aus mineralischen endlosen Verstärkungsfilamenten und einer thermoplastischen Matrix, ein Bauteil zu konsolidieren. Dabei werden thermoplastische Werkstoffe eingesetzt, deren Schmelztemperatur bis zu 380°C beträgt.

In einem ersten Schritt erfolgt die Herstellung eines Preformsegmentes mit kontinuierlichen Durchmesser und Querschnittsprofil. Dabei beschreibt der Begriff Preformsegment, im Sinne dieser Anmeldung, ein strangförmiges Element, das über seine Länge, bezogen zur Längsachse des Umformwerkzeugs, aus einem Abschnitt der nichtkonsolidierten Preform mit vorgewärmter und aufgeschmolzenem Matrix-werkstoff, der im Bauteil verbleibenden Druckmembran und einem Abschnitt aus konsolidiertem Werkstoff besteht. Dazu wird die Preform auf einer schlauchförmigen Druckmembran, die wiederum einen formgebenden Kern umhüllt, mit Hilfe eines geeigneten textilen Fadenablegeverfahrens mehrlagig gebildet.

Solche Fadenablegeverfahren sind an sich bekannte Flecht- oder Spiralisierverfahren, die eine vorgegebene Anzahl an Hybridgarnen oder Tapes, die einen Verstärkungsfilamentanteil aufweisen, in einem vorgegebenen Winkel auf einem formgebenden Kern ablegen. Die Ablage der Tapes oder Hybridgarne erfolgt so, dass die Kernoberfläche vollständig bedeckt ist.

In einem zweiten Verfahrensschritt wird dieses Preform, zusammen mit der schlauchförmigen Druckmembran mit einer an sich bekannten Abzugsvorrichtung in das Umformwerkzeug so eingeführt, dass sich die Dichtelemente im Inneren der Druckmembran befinden. Für diesen Verfahrensschritt sind die Dichtelemente in einen drucklosen Zustand versetzt und das geteilte Umformwerkzeug so geöffnet, dass die Preform keinen Kontakt zur Innenseite hat.

Die derart positionierte Preform wird im weiteren Verlauf dieser Anmeldung als Preformsegment bezeichnet.

In einem dritten Verfahrensschritt wird das Umformwerkzeug in seinen geschlossenen Zustand versetzt und die Druckkammer mit einem Druck beaufschlagt. Infolge dessen verringert sich der radiale Abstand zwischen der Druckmembran und der Innenwand des Umformwerkzeuges, wodurch eine Kompaktierung des Werkstoffes eintritt. Gleichzeitig erfolgt durch den Kontakt der Außenseite des Preformsegmentes mit den Innenwänden der Werkzeugsegmente die Temperierung des Werkstoffes entsprechend der Temperaturzonen.

Nachfolgend werden die verfahrensrelevanten Temperaturregime der einzelnen Werkzeugsegmente des Umformwerkzeuges beschrieben.

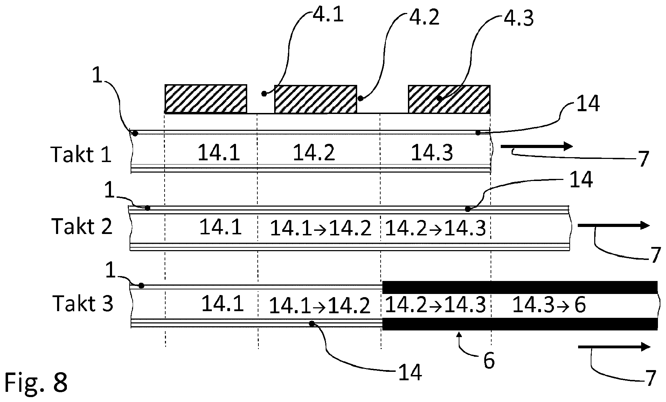

Im Bereich des ersten isotherm beheizten Werkzeugsegments erfolgt die Erwärmung des Preformsegmentes im Abschnitt 14.1 auf eine Temperatur unterhalb der Schmelztemperatur des verwendeten Thermoplasts (vgl. Fig 8).

Im Bereich des zweiten isotherm beheizten Werkzeugsegments erfolgt zeitgleich die Erwärmung des Preformsegmentes in dessen Abschnitt 14.2 auf eine Temperatur oberhalb der Schmelztemperatur des verwendeten Thermoplasts. Der schmelzflüssige thermoplastische Werkstoff beginnt in Folge dessen zu fließen und benetzt dabei die Verstärkungsfilamente (vgl. Fig 8).

Im Bereich des dritten isotherm beheizten Werkzeugsegments erfolgt zeitgleich die endgültige Konsolidierung des Preformsegmentes in dessen Abschnitt 14.3 zum Werkstoff infolge der Abkühlung des schmelzflüssigen, thermoplastischen Werkstoffes und der Verdichtung der Preform durch den Konsolidierungsdruck p₂ zwischen der Druckmembran und den Werkzeugwänden, deren Innenkonturen der Außenkontur des Bauteiles entsprechen (vgl. Fig 8).

In einem vierten Verfahrensschritt wird das Umformwerkzeug geöffnet und die Druckkammer in einen drucklosen Zustand versetzt. Damit löst sich das Preformsegment von der Innenwandung des Umformwerkzeuges und kann, mittels einer an sich bekannten Abzugsvorrichtung, um eine Teillänge s des Umformwerkzeuges verschoben werden. Dabei wird das Preformsegment so verschoben, dass der bisherige Bereich 14.1 des Preformsegmentes der neue Bereich 14.2 ist und der bisherige Bereich 14.2 des Preformsegmentes der neue Bereich 14.3 ist. Der bisherige Bereich 14.3 stellt das endgültige Bauteil dar (vgl. Fig 8).

Diese vier dargestellten Verfahrensschritte werden so lange wiederholt, bis die endgültige Bauteillänge erreicht ist oder der entstehende Strang, bestehend aus einer Vielzahl an Bauteilen, seine gewünschte Länge erreicht hat.

Verfahrensbedingt entsteht bei der erstmaligen Ausführung der Taktung des Verfahrens ein Verschnitt, der aus den ersten beiden Preformsegmenten B und C besteht, da diese beiden Segmente nicht das vollständige Temperaturregime des Verfahrens durchlaufen.

Der erfindungsgemäße, quasi kontinuierliche Arbeitsprozess stellt gegenüber dem Stand der Technik einen erheblichen Vorteil dar. Gerade die isotherme Temperaturführung der einzelnen Werkzeugbereiche führt zu einer Verkürzung der Taktzeit und damit zu einem energieeffizienteren Prozess gegenüber den Verfahren und Vorrichtungen, die aus dem Stand der Technik bekannt sind, da die jeweiligen Werkzeugbereiche keiner Temperaturänderung unterliegen und somit keine taktzeit-bestimmenden Aufheiz- und Abkühlphasen der Werkzeuge zu beachten sind. Weiterhin erfolgt die Abkühlung des Werkstoffes kontrolliert. Über den einstellbaren Temperaturgradienten zwischen den einzelnen Temperaturzonen kann gegenüber den Verfahren und Vorrichtungen, die aus dem Stand der Technik bekannt sind, auf die Abkühlrate und damit auf die vollständige Kristallbildung im Thermoplast Einfluss genommen werden.

Im Folgenden wird die Erfindung anhand von Zeichnungen und einem Ausführungsbeispiel näher erläutert, ohne darauf beschränkt zu sein. Der Übersichtlichkeit halber werden in den Schnittdarstellungen ausschließlich das Werkzeug (4) schraffiert dargestellt.

### Dabei zeigen:

- Fig. 1: Eine Seitenansicht des erfindungsgemäßen Konsolidierungswerkzeugs
- Fig. 1a: Eine Seitenansicht deserfindungsgemäßen Konsolidierungswerkzeugs in einem ersten Verfahrensschritt, in drucklosem und geöffneten Zustand um das Preformsegment zu verschieben
- Fig. 1b: Eine Seitenansicht des erfindungsgemäßen Konsolidierungswerkzeugs in einem zweiten Verfahrensschritt, im geschlossenen und bedruckten Zustand mit Darstellung der Temperaturzonen
- Fig. 1c: Eine Seitenansicht des erfindungsgemäßen Konsolidierungswerkzeugs in einem dritten Verfahrensschritt, im geöffneten, drucklosen Zustand zum Vorschub des Preformsegmentes
- Fig. 2a: Alternative Ausführung des Konsolidierungswerkzeugs mit variablen Querschnitt des resultierenden Bauteils
- Fig. 2b: 3D-Darstellung eines Preformsegmentes
- Fig. 3:: Querschnitte zur Darstellung variabel fertigbarer Querschnittsgeometrien
- Fig. 4:: Detailschnittdarstellung des Werkstoffüberganges zwischen Vorheizzone und Aufschmelzzone
- Fig. 5:: Detailschnittdarstellung eines Dichtelementes
- Fig. 6:: Detaildarstellungen eines Dichtelementes unbedruckt (links) und bedruckt (rechts)
- Fig. 7a:: Eine Draufsicht einer Preformingeinheiten, basierend auf dem Flechtverfahren
- Fig. 7b:: Eine Seitenansicht einer Preformingeinheiten, basierend auf dem Flechtverfahren
- Fig. 7c:: Eine Draufsicht einer Preformingeinheiten, basierend auf dem Spiralisierverfahren
- Fig. 7d:: Eine Seitenansicht einer Preformingeinheiten, basierend auf dem Spiralisierverfahren
- Fig. 8: Eine schematische Darstellung der Taktung des Verfahrens

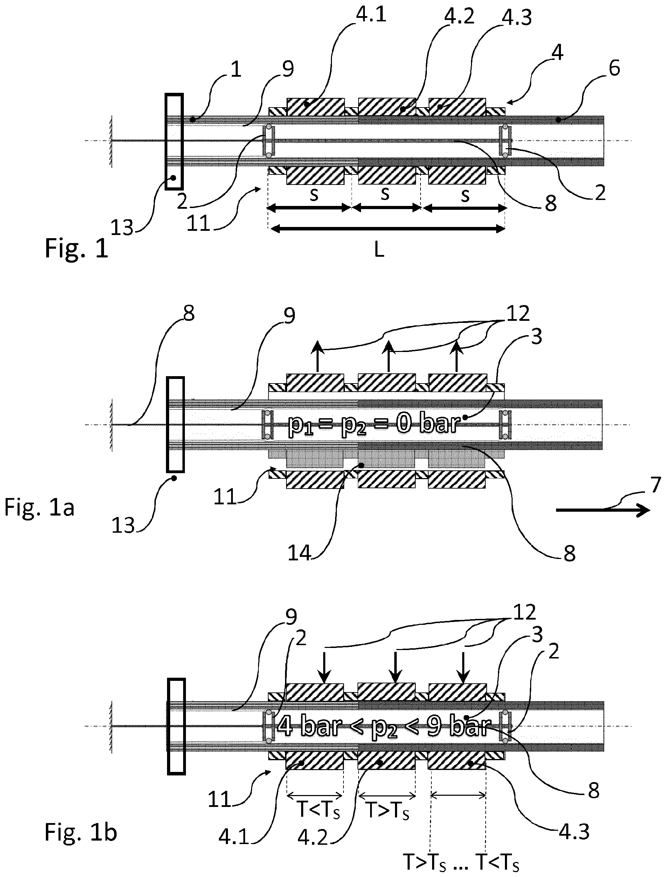

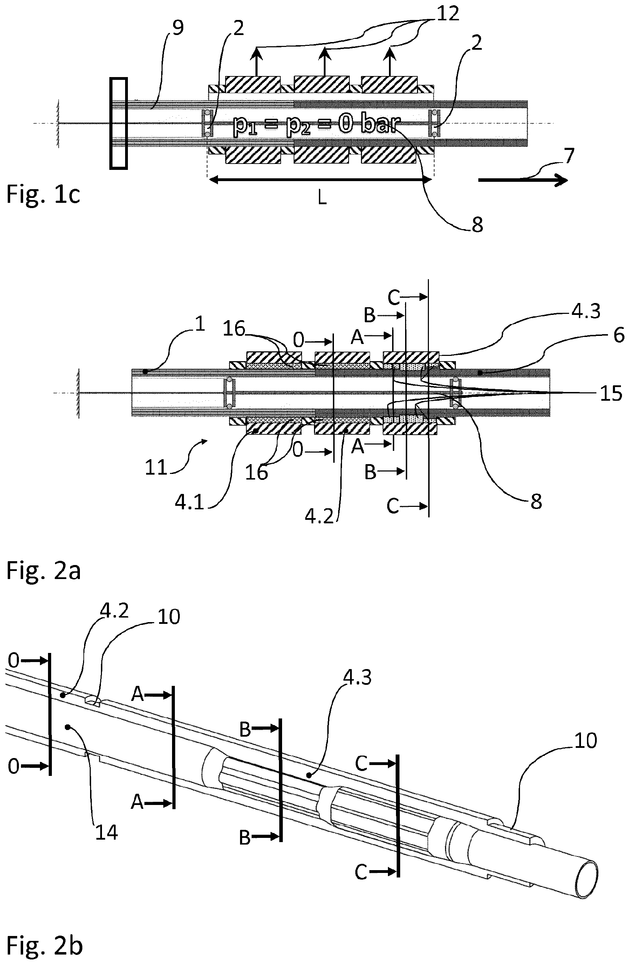

Fig.1 zeigt in einer Seitenansicht eine Konsolidierungsvorrichtung (11), mit der eine schlauchförmige Preform (1), die auf einer schlauchförmigen Druckmembran (9) textiltechnisch durch eine Preformingeinheit (13) aufgebracht ist, in mehreren Verfahrensschritten zu einem Bauteil (6) konsolidiert wird. Das Bauteil (6) weist in einer ersten erfindungsgemäßen Ausführungsform einen konstanten Querschnitt auf. Die Länge L entspricht, im Sinne dieser Anmeldung, dem Abstand der Dichtelemente (2) zueinander und die Teillänge s ist die Länge eines Werkzeugsegmentes (4.1, 4.2, 4.3).

Fig. 1a zeigt in einer Seitenansicht die erfindungsgemäße Konsolidierungsvorrichtung in einem ersten Verfahrensschritt, bei dem das Preformsegment (14) in Vorschubrichtung (7) in die Konsolidierungsvorrichtung bewegt wird. Erfindungsgemäß wird die schlauchförmige Druckmembran (9) in Vorschubrichtung (7) über die Dichtelemente (2) gezogen. Der Vorschubweg des Preformsegmentes entspricht der Teillänge s.

Um den Vorschub zu ermöglichen, wird die Druckkammer (3), gebildet durch die Druckmembran (10) und die Dichtelemente (2), drucklos (p₁=p₂=0) geöffnet und das teilbare Umformwerkzeug (4) in radialer Richtung des Preformsegmentes um den Öffnungsweg (12) auseinandergefahren. Die Größe des Öffnungswegs (12) muss so ausgewählt sein, dass das Preformsegment (14) ohne Kontakt zum Werkzeug (4) in axialer Richtung bewegbar ist.

Fig.1b zeigt in einer Seitenansicht die erfindungsgemäße Konsolidierungsvorrichtung in einem weiteren Verfahrensschritt mit geschlossenem Werkzeug (4) sowie einer unter Druck befindlichen Druckkammer (3).

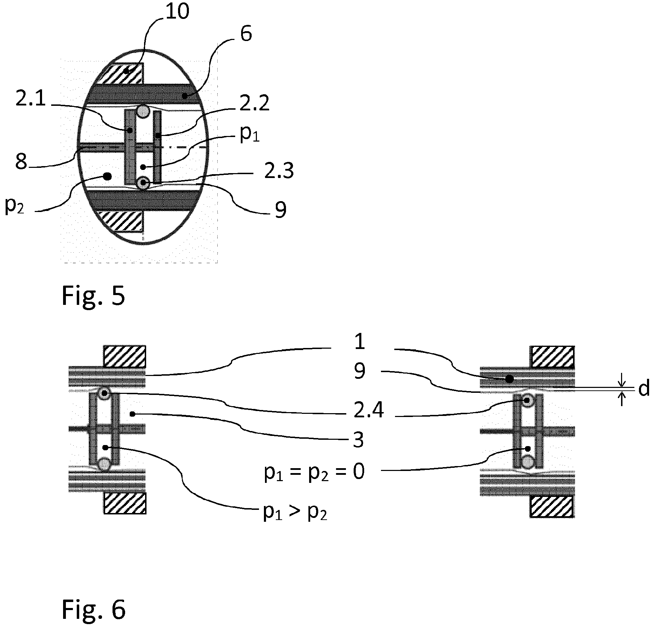

Die erfindungsgemäße Druckkammer (3) wird aus den Dichtelementen (2), die mit einem Druck p₁ beaufschlagt sind und der Druckmembran (9), die mit einem Druck p₂ beaufschlagt ist, gebildet. Die Länge der Druckkammer entspricht dabei dem Abstand L der Dichtelemente (2), die mit einem Koppelelement (8) druckdicht verbunden sind. Dieses erfindungsgemäße Koppelelement (8) ist mit einer, über dessen gesamten Länge verlaufenden Längsbohrung versehen und im Bereich der Dichtelemente (2) mit radial verlaufenden Bohrungen ausgestattet, die es ermöglichen, einen Druck p in den Dichtelementen (2) zu erzeugen. Auf die Wirkungsweise der Dichtelemente (2) wird in den Beschreibungen der Figuren 5 und 6 detailliert eingegangen. Das Koppelelement (8) ist im Bereich der Preformingeinheit (13) konzentrisch zur Mittelachse der Konsolidierungsvorrichtung (11) angeordnet.

Der Konsolidierungsdruck p₂ wird für die Konsolidierungszeit des Werkstoffes konstant zwischen 4 bar und 9 bar gehalten. Der Dichtdruck p ist höher als der Konsolidierungsdruck p₂.

Das Werkzeugsegment der Aufheizzone (4.1) ist auf eine Temperatur aufgeheizt, die unterhalb der Schmelztemperatur des verwendeten Einbettungsmatrixwerkstoffes liegt (T<Ts). Das Werkzeugsegment der Aufschmelzzone (4.2) weist eine Temperatur oberhalb der Schmelztemperatur des verwendeten Einbettungsmatrixwerkstoffes auf (T>Ts). Das Werkzeugsegment der Konsolidier- und Erstarrungszone (4.3) weist eine Temperatur unterhalb der Schmelztemperatur des verwendeten Einbettungsmatrix-werkstoffes auf (T<Ts), die so ausgewählt ist, dass der Einbettungswerkstoff so erstarrt, dass das entstandene Bauteil handhabbar ist. Im Sinne dieser Anmeldung wird unter dem Begriff isotherm verstanden, dass die Werkzeuge in den jeweiligen Temperaturzonen (4.1, 4.2 und 4.3) unabhängig vom Verfahrensschritt konstante Temperaturen aufweisen. Die Dauer der Druckbeaufschlagung entspricht der matrixspezifischen Fließzeit im schmelzflüssigen Zustand.

Die Fig. 1c zeigt in einer Seitenansicht die erfindungsgemäße Konsolidierungs-vorrichtung in einem weiteren Verfahrensschritt mit geöffnetem Werkzeug (4) sowie einer drucklosen Druckkammer (3). In diesem Verfahrensschritt nach dem Konsolidierungsvorgang erfährt das Preformsegment (14) einen Vorschub (7) um die Teillänge s, entsprechend der Temperaturzonenlängen, gegeben durch die Werkzeug-segmente der Temperaturzonen (4.1, 4.2 und 4.3).

Die Fig. 2a zeigt eine alternative, besonders bevorzugte Konsolidierungsvorrichtung in einem geschlossenen Zustand mit mehreren austauschbaren Modulen (16) der Werkzeugsegmente (4.1, 4.2, 4.3) im Werkzeug (4). Die Werkzeuginnenwände des Werkzeugsegmentes der Erstarrungszone (4.3) bestehen in diesem Ausführungs-beispiel aus drei austauschbaren Modulen (16).

Die Fig. 2b zeigt eine dreidimensionale Darstellung eines Preformsegmentes (14) in einem Teilabschnitt L der Konsolidierungsvorrichtung (11) mit einem Teil des an dem Preformsegment (14) anliegenden mehrteiligen Werkzeuges (4). Dargestellt ist dabei ein Abschnitt des Preformsegmentes (14), das im Kontakt mit der Werkzeugwand des Werkzeugs der Aufschmelzzone (4.2) und zum anderen ein Abschnitt des Preformsegmentes (14), das im Kontakt mit der Werkzeugwand des Werkzeugs der Konsolidier- und Erstarrungszone (4.3) steht. Die jeweiligen Temperaturzonen des Werkzeuges sind durch Wärmeübergangsbarrieren (10) voneinander thermisch getrennt.

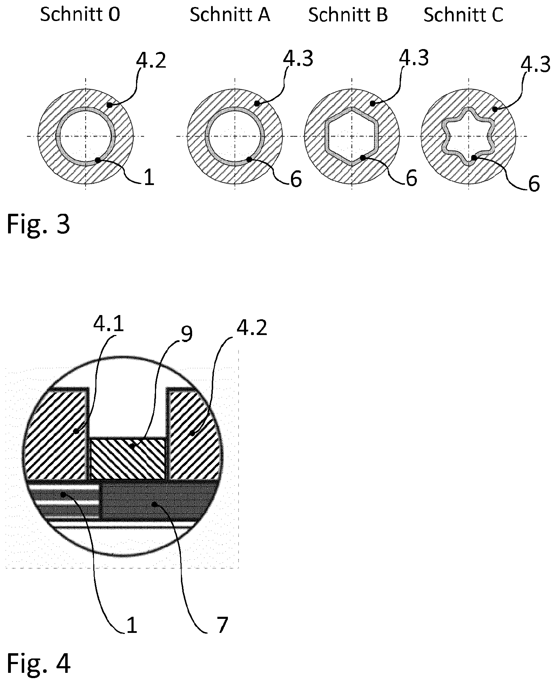

Die Fig. 3 zeigt beispielhaft Querschnitte eines Preformsegmentes mit variierenden Querschnitten in axialer und radialer Richtung, die über die Länge L der Konsolidierungsvorrichtung (11) einstellbar sind. Im Bereich des Schnittes 0 ist dieser Teil des Preformsegmentes im Werkzeugsegment der Aufheizzone (4.2) positioniert und erfährt die Preform (1) noch keine Umformung, sondern wird durch Kontakt mit der Innenwand des Werkzeugsegmentes der Aufheizzone auf Schmelztemperatur aufgewärmt. Im angeschlossenen Teil des Preformsegmentes, gekennzeichnet durch die Schnitte A, B und C, erfolgt die Umformung des Preformsegmentes auf die verschiedenen Querschnitte des resultierenden Bauteiles (6) und die Abkühlung des Werkstoffes unterhalb der Schmelztemperatur des Matrixwerkstoffes.

Detailliert ist in der Fig. 4 der Übergang zwischen Preform (1) und Bauteil (6) des Preformsegmentes (14) im Bereich des Werkzeuges der Vorwärmzone (4.1) und Aufheizzone (4.2) abgebildet. Beide Temperaturzonen sind voneinander durch Wärmeübergangsbarrieren (10) thermisch voneinander getrennt.

In der Fig. 5 ist eine Detaildarstellung eines Dichtelementes (2), beispielhaft im Bereich des resultierenden Bauteils (6), abgebildet. Um die Druckkammer (3) zum Aufbringen des Konsolidierungsdruckes gegenüber dem Umgebungsdruck abzugrenzen, muss in dem Zwischenraum, der durch die elastische Radialdichtung (2.3), sowie den Seitenwänden (2.1) und (2.2) gebildet wird, ein Druck p₁ aufgebracht werden. Die Dichtwirkung des Dichtelementes (2) entsteht, sobald sich die Radialdichtung (2.3) gegenüber der Druckmembran (9), der Preform (1), bzw. dem Bauteil (6) und den Werkzeugwänden (4.1 und 4.3) verspannt. Dazu muss der Druck p₁ größer sein als der Druck p₂. Durch einen in der Längsachse des Koppelelementes (8) und über dessen gesamte Länge verlaufenden Kanal, der mit jeweils mindestens einer Bohrung verbunden ist, die in radialer Richtung und zwischen den Seitenwänden (2.1) und (2.2) angeordnet ist, können die Dichtelemente (2) mit dem Druck p₁ beaufschlagt werden.

In der linken Darstellung der Fig. 6 ist das Detail des Dichtelementes (2) mit der Radialdichtung (2.3) im druckbeaufschlagten Zustand dargestellt. Hier wirkt der Druck p1 in den Dichtelementen, der größer ist als der Druck p₂ und im Bereich der Dichtelemente die Druckmembran (9) gegen die Preform (1) drückt. Infolge dessen ist temporär die Druckkammer (3) über die Länge L der Konsolidierungsvorrichtung (11) ausgebildet und wird mit dem Druck p₂ beaufschlagt, der die Druckmembran (9) gegen die Preform (1) drückt.

In der rechten Darstellung ist das drucklose Dichtelement (2) und die drucklose Druckkammer (3) dargestellt. Dabei weist die Druckmembran (9) einen Abstand d von der Preform (1) auf, der größer null ist.

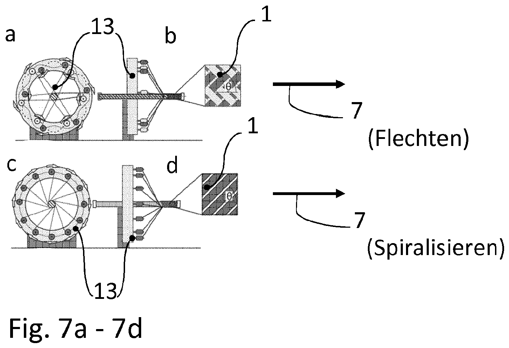

In den Fig 7 a - d sind bevorzugte Preformingeinheiten (13) dargestellt. Diese bevorzugt verwendeten Flecht- oder Spiralisiermaschinen sind geeignet, um endlose textile Halbzeuge auf einem Kern abzulegen und dadurch die Preform (1) auszubilden.

In Fig. 8 sind schematisch die ersten drei erfindungswesentlichen Takte zum Beginn des Verfahrens dargestellt, die das Preformsegment (14) durchläuft, um durch das Umformwerkzeug (4) die Preform (1) in ein Bauteil (6) zu konsolidieren.

Dabei wird das Preformsegment (14) im ersten Takt so in dem Umformwerkzeug (4) positioniert, dass es von diesem vollständig umhüllt ist und in den Bereichen 14.1, 14.2 und 14.3, durch Kontakt mit den Werkzeugsegmenten (4.1, 4.2, 4.2), zeitgleich auf die jeweiligen Temperaturen aufgewärmt bzw. gekühlt wird.

Im zweiten Takt wird das Preformsegment im Umformwerkzeug (4) so positioniert, dass der bisherige Bereich 14.1 der neue Bereich 14.2 und der bisherige Bereich 14.2 der neue Bereich 14.3 wird.

Im dritten Takt des Verfahrens wird die Preform wiederum so positioniert, dass der bisherige Bereich 14.1 der neue Bereich 14.2 und der bisherige Bereich 14.2 der neue Bereich 14.3 wird. Während der Abfolge der Taktungen wird die Preform (1) endlos zur Verfügung gestellt und je Takt zum jeweils neuen Bereich 14.1.

Das fertige Bauteil (6) entspricht jeweils dem bisherigen Bereich 14.3. Verfahrensbedingt entsteht nach der Ausführung der ersten beiden Takte zum Beginn des Verfahrens ein Verschnitt aus den Bereichen 14.2 und 14.3, auf die das vollständige Temperaturregime noch nicht eingewirkt hat.

### Bezugszeichen

- 1: Preform
- 2: Dichtelement
- 2.1: Innere Wandung Dichtelement
- 2.2: Äußere Wandung Dichtelement
- 2.3: Druckkammer in Dichtelement
- 2.4: Elastische Dichtung
- 3: Druckkammer zum Aufbringen des Konsolidierungsdruckes
- 4: Teilbares Werkzeug
- 4.1: Teilbares Werkzeug der Vorheizzone
- 4.2: Teilbares Werkzeug der Aufschmelzone
- 4.3: Teilbares Werkzeug der Konsolidier- und Erstarrungszone
- 6: Bauteil
- 7: Vorschub- bzw. Abzugsrichtung
- 8: Koppelelement Dichtelemente
- 9: Druckmembran
- 10: Wärmeübergangsbarriere
- 11: Konsolidierungsvorrichtung der Länge L
- 12: Verfahrweg des oberen Werkzeuges
- 13: Preformingeinheit
- 14: Preformsegment
- 15: Austauschbare Module der Erstarrungszone
- 16: Austauschbare Module der Vorwärm- und Aufheizzone

## Patentansprüche

1. Vorrichtung zum semikontinuierlichen Blasformen faserverstärkter, thermoplastischer, endloser, hohlprofilförmiger Bauteile mit in Längsrichtung konstanten oder variierenden Querschnitten, bestehend aus mindestens einem Konsolidierwerkzeug (4), das im geschlossenen Zustand eine Preform (1) umschließt, welche eine elastisch verformbare Druckkammer (3) umhüllt, wobei
a. eine Preformingeinheit (13) und das Konsolidierwerkzeug (4) unmittelbar aufeinander folgend angeordnet sind,
b. die Preformingeinheit (13) die endlose Preform (1) bereitstellt,
c. die von dem Konsolidierwerkzeug umschlossene Preform (1) ein Preformsegment (14) ist,
d. die Mittelachsen der Preformingeinheit (13), des Konsolidierwerkzeugs (4) des Preformsegmentes (14) und der Druckkammer (3) deckungsgleich angeordnet sind,
e. das Konsolidierwerkzeug (4) mindestens zweiteilig ausgeführt ist und
f. das Konsolidierwerkzeug der Kontur des Bauteiles (6) entspricht,
wobei
das Konsolidierwerkzeug (4) mindestens drei voneinander unabhängig isotherm temperierte Werkzeugsegmente (4.1, 4.2, 4.3) aufweist und die Werkzeugsegmente entlang der Mittelachse unmittelbar aufeinander folgend angeordnet sind, und wobei
• die Abmessungen des Konsolidierwerkzeugs (4), der Druckkammer (3) und des zu bearbeitenden Preformsegmentes (14) entlang der Mittelachse identisch sind,
• die Vorrichtung eine Vorschubeinrichtung (7) aufweist, die geeignet ist, die Preform (1) wiederholt um die Länge eines Werkzeugsegmentes (4.1 oder 4.2 oder 4.3) in eine Bearbeitungsrichtung zu verschieben, die entlang der Mittelachse von einem ersten Werkzeugsegment (4.1) bis zu einem dritten Werkzeugsegment (4.3) gerichtet ist,
• die Druckkammer (3)
- aus einer endlosen, verformbaren Druckmembran (9) und aus und aus den Dichtelementen (2) gebildet wird oder
- die Druckmembran (9) ein verformbarer Schlauch ist, der fest mit den Dichtelementen (2) verbunden ist und
• die Druckkammer (3) mit Druck beaufschlagt werden kann.

2. Vorrichtung nach Anspruch 1, **dadurch gekennzeichnet, dass** die Werkzeugsegmente (4.1, 4.2) an der Werkzeuginnenwand aus austauschbaren Modulen (16) bestehen, die von der Endkontur des Bauteils (6) abweichen.

3. Vorrichtung nach Anspruch 1, **dadurch gekennzeichnet, dass** das Werkzeugsegment (4.3) an der Werkzeuginnenwand aus mindestens einem austauschbaren Modul (15) besteht, dessen Innenkontur der Außenkontur des Bauteils (6) entspricht.

4. Vorrichtung nach einem der Ansprüche 1 bis 3, **dadurch gekennzeichnet, dass** die Werkzeugsegmente (4.1, 4.2, 4.3) eine identische Länge aufweisen.

5. Vorrichtung nach einem der Ansprüche 1 bis 4, **dadurch gekennzeichnet, dass** die Werkzeugsegmente (4.1, 4.2, 4.3) durch Wärmeübergangsbarrieren (10) thermisch voneinander entkoppelt sind.

6. Vorrichtung nach Anspruch 1, **dadurch gekennzeichnet, dass** die Druckkammer (3) aus mindestens zwei Dichtelementen (2) besteht, die einen Abstand zueinander aufweisen, die druckdicht mit einem Koppelement (8) verbunden sind und jeweils eine Dichtung (2.4) aufweisen, die unter einem Druck p₁ radial gegen die Druckmembran (9) wirken und so die Druckkammer (3) ausbilden.

7. Vorrichtung nach Anspruch 6, **dadurch gekennzeichnet, dass** das Koppelelement (8) im Bereich der Preformingeinheit (13) fixiert ist und einen Luftkanal entlang seiner Längsachse aufweist, der über die gesamte Länge des Koppelelementes (8) verläuft und der im Bereich der Dichtelemente (2) radial angeordnete Luftauslässe aufweist, die der Druckbeaufschlagung mit dem Druck p₁ dienen.

8. Vorrichtung nach einem der Ansprüche 1 bis 6, **dadurch gekennzeichnet, dass** der Werkstoff der Druckmembran (9) derselben Werkstoffklasse der Einbettungsmatrix der Preform (1) entspricht und einen höheren Polymerisationsgrad aufweist und eine Dicke zwischen 50 µm und 60 µm aufweist.

9. Verfahren zum semikontinuierlichen Blasformen faserverstärkter thermoplastischer Hohlprofile mit in Längsrichtung konstanten oder variierenden Querschnitten, aufweisend mindestens die Schritte:
a) Bereitstellen einer schlauchförmigen Druckmembran (9), die mit einer Preform (1), die thermoplastisches Matrixmaterial aufweist, beschichtet oder umschlossen ist,
b) Bereitstellen einer Vorrichtung nach Anspruch 1,
c) Positionieren der schlauchförmigen Druckmembran (9) und der Preform (1) derart, dass sie sich über die gesamte Länge des Konsolidierwerkzeugs (4) erstreckt und die Dichtelemente (2) überdeckt,
d) Schließen des Konsolidierwerkzeugs (4),
e) Komprimierung des Preformsegmentes (14.1, 14.2, 14.3) durch Vergrößerung des Durchmessers der Druckmembran (9) mittels Druckbeaufschlagung und Anschmiegen des Preformsegmentes (14.1, 14.2, 14.3) an die Innenwand des Konsolidierwerkzeuges (4),
f) Erwärmen eines ersten Preformsegmentes (14.1) in einem ersten Werkzeugsegment (4.1) des Konsolidierwerkzeugs (4) auf eine Temperatur unterhalb der Schmelztemperatur des verwendeten Thermoplasts, zeitgleich Erwärmen eines zweiten Preformsegmentes (14.2) im zweiten Werkzeugsegment (4.2) des Konsolidierwerkzeugs (4) auf eine Temperatur, die die Schmelztemperatur des Matrixmaterials mindestens erreicht, zeitgleich Kühlen und Formgebung eines dritten Preformsegmentes (14.3) in einem dritten Werkzeugsegment (4.3) des Konsolidierwerkzeugs (4) auf eine Temperatur, die die Erstarrungstemperatur des Matrixmaterials unterschreitet,
g) Beenden der Druckbeaufschlagung der Druckmembran (9),
h) Öffnen des Konsolidierwerkzeugs (4) und nachfolgend Vorschub der Preform (1) um die Länge eines Werkzeugsegmentes (4.1, 4.2, 4.3) und nachfolgend Verschließen des Konsolidierwerkzeugs (4) und
i) Wiederholung der Schritte e) bis h).

10. Verfahren nach Anspruch 9 **dadurch gekennzeichnet, dass** die Druckbeaufschlagung durch den Konsolidierungsdruck p₂ zwischen 4 bar und 10 bar, besonders bevorzugt zwischen 5 bar und 9 bar beträgt und dass der Dichtdruck p₁ größer ist als der Konsolidierungsdruck p₂ und zwischen den Dichtelementen (2) und der Druckmembran (9) einwirkt.

11. Verfahren nach Anspruch 9 oder 10, **dadurch gekennzeichnet, dass** Verstärkungsfilamente der Preform (1) Glas-, Kohlenstoff-, Basalt- und thermoplastische Filamente sind, die einen höheren Schmelzpunkt als die umgebende Einbettungsmatrix der Preform (1) aufweisen.

12. Verfahren nach einem der Ansprüche 9 bis 11 **dadurch gekennzeichnet, dass** die thermoplastischen Matrixwerkstoffe der Preform (1) organische Polymere sind, deren Schmelztemperaturen in einem Bereich zwischen 70 °C und 380 °C liegen.

13. Verwendung der Vorrichtung nach einem der Ansprüche 1 bis 8 zur Herstellung eines faserverstärkten thermoplastischen Hohlprofils.

## Claims

1. Device for semi-continously blow molding fiber-reinforced, thermoplastic, endless, hollow-profile components with constant or varying cross-sections in the longitudinal direction, consisting of at least one consolidating tool (4) which, in the closed state, encloses a preform (1) which envelops an elastically deformable pressure chamber (3), wherein
a. a preforming unit (13) and the consolidating tool (4) are arranged in direct succession,
b. the preforming unit (13) provides the endless preform (1),
c. the preform (1) enclosed by the consolidating tool is a preform segment (14),
d. the central axes of the preforming unit (13), the consolidating tool (4) of the preform segment (14) and the pressure chamber (3) are arranged congruently,
e. the consolidating tool (4) is designed in at least two parts and
f. the consolidating tool corresponds to the contour of the component (6),
whereby
the consolidating tool (4) has at least three tool segments (4.1, 4.2, 4.3) which are isothermally tempered independently of one another and the tool segments are arranged in immediate succession along the central axis, and wherein
• the dimensions of the consolidating tool (4), the pressure chamber (3) and the preform segment (14) to be processed are identical along the central axis,
• the device has a feed device (7) which is suitable for repeatedly displacing the preform (1) by the length of a tool segment (4.1 or 4.2 or 4.3) in a machining direction which is directed along the central axis from a first tool segment (4.1) to a third tool segment (4.3),
• the pressure chamber (3)
- is formed from an endless, deformable pressure diaphragm (9) and from and from the sealing elements (2) or
- the pressure diaphragm (9) is a deformable tube which is firmly connected to the sealing elements (2), and
• the pressure chamber (3) can be pressurized.

2. Device according to claim 1, **characterized in that** the tool segments (4.1, 4.2) on the inner wall of the tool consist of interchangeable modules (16) which deviate from the final contour of the component (6).

3. Device according to claim 1, **characterized in that** the tool segment (4.3) on the inner wall of the tool consists of at least one interchangeable modul (15), the inner contour of which corresponds to the outer contour of the component (6).

4. Device according to any of claims 1 to 3, **characterized in that** the tool segments (4.1, 4.2, 4.3) have an identical length.

5. Device according to any of claims 1 to 4, **characterized in that** the tool segments (4.1, 4.2, 4.3) are thermally decoupled from one another by heat transfer barriers (10).

6. Device according to claim 1, **characterized in that** the pressure chamber (3) consists of at least two sealing elements (2) which are spaced apart from one another, are connected in a pressure-tight manner to a coupling element (8) and each have a seal (2.4) which acts radially against the pressure diaphragm (9) under a pressure p₁ and thus form the pressure chamber (3).

7. Device according to claim 6, **characterized in that** the coupling element (8) is fixed in the region of the preforming unit (13) and has an air duct along its longitudinal axis, which runs over the entire length of the coupling element (8) and which has radially arranged air outlets in the region of the sealing elements (2), which serve for pressurization with the pressure p₁ .

8. Device according to any of claims 1 to 6, **characterized in that** the material of the pressure diaphragm (9) corresponds to the same material class of the embedding matrix of the preform (1) and has a higher degree of polymerization and a thickness of between 50 µm and 60 µm.

9. Method for semi-continously blow molding fiber-reinforced thermoplastic hollow-profile sections with constant or varying cross-sections in the longitudinal direction, comprising at least the steps:
a) Providing a tubular pressure diaphragm (9) coated or enclosed with a preform (1) comprising thermoplastic matrix material,
b) Providing a device according to claim 1,
c) Positioning of the tubular pressure diaphragm (9) and the preform (1) in such a way that it extends over the entire length of the consolidating tool (4) and covers the sealing elements (2),
d) Closing the consolidating tool (4),
e) Compression of the preform segment (14.1, 14.2, 14.3) by enlarging the diameter of the pressure diaphragm (9) by means of pressurization and pressing the preform segment (14.1, 14.2, 14.3) against the inner wall of the consolidating tool (4),
f) Heating of a first preform segment (14.1) in a first tool segment (4.1) of the consolidating tool (4) to a temperature below the melting temperature of the thermoplastic used, simultaneous heating of a second preform segment (14.2) in the second tool segment (4.2) of the consolidating tool (4) to a temperature which at least reaches the melting temperature of the matrix material, simultaneously cooling and shaping a third preform segment (14.3) in a third tool segment (4.3) of the consolidating tool (4) to a temperature which is below the solidification temperature of the matrix material,
g) Ending the pressurization of the pressure diaphragm (9),
h) Opening of the consolidating tool (4) and subsequent advancement of the preform (1) by the length of a tool segment (4.1, 4.2, 4.3) and subsequent closing of the consolidating tool (4) and
i) Repetition of steps e) to h).

10. Method according to claim 9, **characterized in that** the pressurization by the consolidation pressure p₂ is between 4 bar and 10 bar, particularly preferably between 5 bar and 9 bar and **in that** the sealing pressure p₁ is greater than the consolidation pressure p₂ and acts between the sealing elements (2) and the pressure diaphragm (9).

11. Method according to claim 9 or 10, **characterized in that** reinforcing filaments of the preform (1) are glass, carbon, basalt and thermoplastic filaments which have a higher melting point than the surrounding embedding matrix of the preform (1).

12. Method according to any of claims 9 to 11, **characterized in that** the thermoplastic matrix materials of the preform (1) are organic polymers whose melting temperatures are in a range between 70 °C and 380 °C.

13. Use of the device according to any of claims 1 to 8 for producing a fiber-reinforced thermoplastic hollow-profile.

## Revendications

1. Dispositif pour le moulage par soufflage semi-continu de composants thermoplastiques, renforcés par des fibres, sans fin, en forme de profilé creux, avec des sections transversales constantes ou variables dans la direction longitudinale, constitué d'au moins un outil de consolidation (4) qui, à l'état fermé, entoure une préforme (1) qui enveloppe une chambre de pression (3) déformable élastiquement, dans lequel
a. une unité de préformage (13) et l'outil de consolidation (4) sont disposés directement l'un après l'autre,
b. l'unité de préformage (13) fournit la préforme sans fin (1),
c. la préforme (1) entourée par l'outil de consolidation est un segment de préforme (14),
d. les axes centraux de l'unité de préformage (13), de l'outil de consolidation (4) du segment de préformage (14) et de la chambre de pression (3) sont disposés de manière à coïncider,
e. l'outil de consolidation (4) est réalisé au moins en deux parties et
f. l'outil de consolidation correspond au contour de la pièce (6), où
l'outil de consolidation (4) présente au moins trois segments d'outil (4.1, 4.2, 4.3) à température isotherme indépendante les uns des autres et les segments d'outil sont disposés directement les uns à la suite des autres le long de l'axe central, et où
• les dimensions de l'outil de consolidation (4), de la chambre de pression (3) et du segment de préforme (14) à traiter sont identiques le long de l'axe central,
• le dispositif présente un dispositif d'avance (7) qui est approprié pour déplacer la préforme (1) de manière répétée de la longueur d'un segment d'outil (4.1 ou 4.2 ou 4.3) dans une direction d'usinage qui est dirigée le long de l'axe central d'un premier segment d'outil (4.1) jusqu'à un troisième segment d'outil (4.3),
• la chambre de compression (3)
- est formé d'une membrane de pression (9) sans fin et déformable et des éléments d'étanchéité (2) ou
- la membrane de pression (9) est un tuyau flexible déformable qui est relié de manière fixe aux éléments d'étanchéité (2) et
• la chambre de pression (3) peut être mise sous pression.

2. Dispositif selon la revendication 1, **caractérisé en ce que** les segments d'outil (4.1, 4.2) sur la paroi intérieure de l'outil sont constitués de modules interchangeables (16) qui diffèrent du contour final de la pièce (6).

3. Dispositif selon la revendication 1, **caractérisé en ce que** le segment d'outil (4.3) sur la paroi intérieure de l'outil est constitué d'au moins un module interchangeable (15) dont le contour intérieur correspond au contour extérieur de la pièce (6).

4. Dispositif selon l'une des revendications 1 à 3, **caractérisé en ce que** les segments d'outil (4.1, 4.2, 4.3) présentent une longueur identique.

5. Dispositif selon l'une des revendications 1 à 4, **caractérisé en ce que** les segments d'outil (4.1, 4.2, 4.3) sont découplés thermiquement les uns des autres par des barrières de transfert de chaleur (10).

6. Dispositif selon la revendication 1, **caractérisé en ce que** la chambre de pression (3) est constituée d'au moins deux éléments d'étanchéité (2) qui sont espacés l'un de l'autre, qui sont reliés de manière étanche à la pression à un élément de couplage (8) et qui présentent chacun un joint d'étanchéité (2.4), qui agissent radialement contre la membrane de pression (9) sous une pression p₁ et forment ainsi la chambre de pression (3).

7. Dispositif selon la revendication 6, **caractérisé en ce que** l'élément de couplage (8) est fixé dans la zone de l'unité de préformage (13) et présente un canal d'air le long de son axe longitudinal, qui s'étend sur toute la longueur de l'élément de couplage (8) et qui présente, dans la zone des éléments d'étanchéité (2), des sorties d'air disposées radialement, qui servent à la mise sous pression avec la pression p₁.

8. Dispositif selon l'une des revendications 1 à 6, **caractérisé en ce que** le matériau de la membrane d'impression (9) correspond à la même classe de matériau que la matrice d'enrobage de la préforme (1) et présente un degré de polymérisation plus élevé et une épaisseur comprise entre 50 µm et 60 µm.

9. Procédé de moulage par soufflage semi-continu de profilés creux thermoplastiques renforcés par des fibres, ayant des sections transversales constantes ou variables dans la direction longitudinale, comprenant au moins les étapes suivantes :
a) fournir une membrane de pression tubulaire (9) qui est revêtue ou entourée d'une préforme (1) comprenant un matériau de matrice thermoplastique,
b) Fournir un dispositif selon la revendication 1,
c) positionner la membrane de pression tubulaire (9) et la préforme (1) de manière à ce qu'elle s'étende sur toute la longueur de l'outil de consolidation (4) et recouvre les éléments d'étanchéité (2),
d) Fermeture de l'outil de consolidation (4),
e) compression du segment de préforme (14.1, 14.2, 14.3) en augmentant le diamètre de la membrane de pression (9) au moyen d'une mise sous pression et en appliquant le segment de préforme (14.1, 14.2, 14.3) contre la paroi intérieure de l'outil de consolidation (4),
f) Chauffage d'un premier segment de préforme (14.1) dans un premier segment d'outil (4.1) de l'outil de consolidation (4) à une température inférieure à la température de fusion du thermoplastique utilisé, chauffage simultané d'un deuxième segment de préforme (14.2) dans le deuxième segment d'outil (4.2) de l'outil de consolidation (4) à une température qui atteint au moins la température de fusion du matériau de la matrice, simultanément refroidissement et formage d'un troisième segment de préforme (14.3) dans un troisième segment d'outil (4.3) de l'outil de consolidation (4) à une température qui est inférieure à la température de solidification du matériau de la matrice,
g) Arrêt de la mise sous pression de la membrane de pression (9),
h) ouverture de l'outil de consolidation (4) et ensuite avance de la préforme (1) de la longueur d'un segment d'outil (4.1, 4.2, 4.3) et ensuite fermeture de l'outil de consolidation (4) et
i) Répétition des étapes e) à h).

10. Procédé selon la revendication 9, **caractérisé en ce que** la sollicitation en pression par la pression de consolidation p₂ est comprise entre 4 bars et 10 bars, de préférence entre 5 bars et 9 bars et **en ce que** la pression d'étanchéité p₁ est supérieure à la pression de consolidation p₂ et agit entre les éléments d'étanchéité (2) et la membrane de pression (9).

11. Procédé selon la revendication 9 ou 10, **caractérisé en ce que** les filaments de renforcement de la préforme (1) sont des filaments de verre, de carbone, de basalte et thermoplastiques qui présentent un point de fusion plus élevé que la matrice d'enrobage environnante de la préforme (1).

12. Procédé selon l'une des revendications 9 à 11, **caractérisé en ce que** les matériaux de matrice thermoplastique de la préforme (1) sont des polymères organiques dont les températures de fusion se situent dans une plage comprise entre 70°C et 380°C.

13. Utilisation du dispositif selon l'une des revendications 1 à 8 pour la fabrication d'un profilé creux thermoplastique renforcé par des fibres.
